(19) Europäisches Patentamt
European Patent Office
Office européen des brevets

(11) **EP 1 907 912 B1**

(12) **FASCICULE DE BREVET EUROPEEN**

(45) Date de publication et mention
de la délivrance du brevet:
**08.03.2017 Bulletin 2017/10**

(21) Numéro de dépôt: **06794187.2**

(22) Date de dépôt: **17.07.2006**

(51) Int Cl.:
***G05D 1/08*** *(2006.01)*

(86) Numéro de dépôt international:
**PCT/FR2006/001740**

(87) Numéro de publication internationale:
**WO 2007/012728 (01.02.2007 Gazette 2007/05)**

(54) **PROCÉDÉ ET DISPOSITIF DE PILOTAGE D'UN AÉRONEF SELON AU MOINS UN AXE DE PILOTAGE**

VERFAHREN UND VORRICHTUNG ZUM FLIEGEN EINES FLUGZEUGES GEMÄSS MINDESTENS EINER FLUGSTRECKE

METHOD AND DEVICE FOR FLYING AN AIRCRAFT ACCORDING TO AT LEAST ONE FLYING LINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.07.2005 FR 0508053**

(43) Date de publication de la demande:
**09.04.2008 Bulletin 2008/15**

(73) Titulaire: **AIRBUS OPERATIONS (SAS)**
**31060 Toulouse (FR)**

(72) Inventeur: **DELANNOY, Stéphane**
**32600 Pujaudran (FR)**

(74) Mandataire: **Gevers & Orès**
**41 avenue de Friedland**
**75008 Paris (FR)**

(56) Documents cités:
**FR-A- 2 847 352     GB-A- 1 579 339**
**US-A- 4 298 833     US-A- 5 935 177**

**Description**

La présente invention concerne un procédé et un dispositif de pilotage d'un aéronef, par exemple d'un avion de transport, selon au moins un axe de pilotage (à savoir en roulis, en lacet et/ou en tangage).

Le document US5935177 divulgue un procédé et un dispositif de pilotage de l'art antérieur.

On sait que lors du pilotage manuel d'un avion, le pilote peut involontairement se coupler avec l'avion aux fréquences des modes propres dudit avion. Ce couplage peut devenir instable et se traduire par des ordres oscillants non amortis du pilote. Une telle situation peut en particulier se présenter si le gain pilote est inadapté (trop fort) aux capacités de l'avion, liées à son inertie et aux performances de ses différents actionneurs. Si l'avion répond tardivement au pilote, ce dernier augmente généralement son gain, ce qui rapproche le système de l'instabilité, en augmentant encore le déphasage entre l'ordre représentatif de la commande du pilote et l'ordre effectivement appliqué à l'avion.

Un mouvement oscillatoire incontrôlé d'un avion, résultant d'un tel déphasage critique entre l'action du pilote sur les commandes et la réponse de l'avion, est appelé "pompage piloté" ou "oscillation induite par le pilote" PIO ("Pilot Induced Oscillation" en anglais).

La présente invention a pour objet de remédier à ces inconvénients. Elle concerne un procédé de pilotage d'un aéronef, en particulier d'un avion, selon au moins un axe de pilotage dudit aéronef, qui permet d'empêcher l'apparition du couplage instable précité selon ledit axe de pilotage et ainsi de conserver un pilotage particulièrement stable.

A cet effet, selon l'invention, ledit procédé selon lequel :

A/ on détermine une valeur de commande qui correspond à la valeur d'un ordre de pilotage relatif audit axe de pilotage, ladite valeur étant représentative de l'actionnement d'au moins un organe de commande de l'aéronef, par un pilote dudit aéronef ;

B/ on détermine une valeur effective commandée qui correspond à la valeur dudit ordre de pilotage, effectivement appliquée à l'aéronef ; et

C/ on réalise à l'aide de ladite valeur de commande et de ladite valeur effectivement commandée, un asservissement de l'aéronef relatif audit ordre de pilotage, en appliquant à l'aéronef un ordre permettant d'annuler, le cas échéant, la différence entre ladite valeur de commande et ladite valeur effective commandée,

est remarquable en ce que :

- on calcule, à partir de ladite valeur de commande et de ladite valeur effective commandée, une valeur de commande auxiliaire qui est plus proche de ladite valeur effective commandée que ladite valeur de commande ;

- on réalise une surveillance de ladite valeur de commande permettant de détecter un pompage piloté ; et

- en cas de détection d'un pompage piloté, on réalise l'asservissement à l'étape C/, à l'aide de ladite valeur effective commandée et de ladite valeur de commande auxiliaire.

Ainsi, grâce à l'invention, on réalise une action corrective dès l'apparition d'un pompage piloté, ce qui permet d'empêcher l'installation d'un couplage instable du type précité et donc de conserver un pilotage particulièrement stable.

On notera qu'en calculant une valeur de commande auxiliaire et en appliquant cette valeur de commande auxiliaire à l'asservissement lors de la détection d'un pompage piloté, on réduit le déphasage entre la valeur de commande utilisée et la valeur effective commandée, puisque ladite valeur de commande auxiliaire calculée est (par définition) plus proche de ladite valeur effective commandée que de ladite valeur de commande (ordre direct du pilote).

La réduction de ce déphasage empêche ainsi l'apparition de l'instabilité précitée.

En outre, comme ladite valeur de commande auxiliaire est déterminée notamment à partir de ladite valeur de commande et tient donc compte de l'ordre commandé par le pilote, la correction introduite par le procédé de pilotage conforme à l'invention ne perturbe pas (du moins pas excessivement) le pilotage de l'aéronef.

Dans un mode de réalisation préféré, ledit axe de pilotage correspond à l'axe de pilotage en roulis et ledit ordre de pilotage représente un taux de roulis.

Dans ce cas, avantageusement, pour calculer ladite valeur de commande auxiliaire :

- on détermine une valeur $\Delta P$ dépendant de ladite valeur de commande P représentant un taux de roulis ;

- on calcule le produit de cette valeur $\Delta P$ et de ladite valeur effective commandée $\underline{p}$ représentant un taux de roulis effectif commandé ; et

- en fonction de ce calcul :

    • si ce produit est supérieur à zéro, on calcule la valeur de commande auxiliaire Paux représentant un taux de roulis auxiliaire, à l'aide de l'expression suivante :

$$Paux = \frac{(\underline{K.T.s}) . \Delta P + p}{T.s + 1}$$

dans laquelle :

    \* K représente une valeur de gain prédéterminée ;

\* T représente une constante de temps prédéterminée ; et

\* s représente une variable caractéristique d'une transformation de Laplace ; et

- si ce produit est inférieur à zéro, on calcule la valeur de commande auxiliaire Paux représentant un taux de roulis auxiliaire, à l'aide de l'expression suivante :

$$Paux = \frac{(\underline{K.T.s})}{T.s + 1} . \Delta P$$

De préférence, dans ce cas, on détermine ladite valeur ΔP, à l'aide de l'expression suivante :

$$\Delta P = P/5.$$

Ainsi, le procédé conforme à l'invention ne gêne pas le pilotage lors de l'absence d'un pilotage pompé et ne réduit pas de manière significative la maniabilité de l'aéronef dans ce cas.

La présente invention minimise donc le déphasage entre la valeur de commande (taux de roulis de commande par exemple) et la valeur effective commandée (taux de roulis effectif commandé par exemple), par une action non linéaire sur ladite valeur de commande, par l'intermédiaire de la génération et de l'application de ladite valeur de commande auxiliaire.

Avantageusement, on détecte un pilotage pompé, lorsque l'une des deux conditions suivantes est vérifiée :

- la valeur de commande P représentant un taux de roulis dépasse successivement + NIVPIO, - NIVPIO et + NIVPIO à une fréquence comprise entre deux fréquences prédéterminées, NIVPIO représentant une valeur prédéterminée ;
- ladite valeur de commande P représentant un taux de roulis dépasse successivement - NIVPIO, + NIVPIO et - NIVPIO à une fréquence comprise entre lesdites deux fréquences prédéterminées.

En outre, de façon avantageuse, un asservissement sur la valeur de commande auxiliaire s'enclenche sur une première durée prédéterminée et s'arrête complètement après une seconde durée prédéterminée.

Par ailleurs, dans un autre mode de réalisation, ledit axe de pilotage peut également correspondre à l'axe de pilotage en tangage ou à l'axe de pilotage en lacet dudit aéronef.

La présente invention concerne également un dispositif de pilotage d'un aéronef, en particulier d'un avion de transport, selon au moins un axe de pilotage (roulis, lacet, tangage).

Selon l'invention, ledit dispositif du type comportant :

- des premiers moyens pour déterminer une valeur de commande qui correspond à la valeur d'un ordre de pilotage relatif audit axe de pilotage, cette valeur étant représentative de l'actionnement d'au moins un organe de commande de l'aéronef par un pilote dudit aéronef ;
- des deuxièmes moyens pour déterminer une valeur effective commandée qui correspond à la valeur dudit ordre de pilotage, effectivement appliquée à l'aéronef ; et
- des troisièmes moyens pour réaliser, à l'aide de ladite valeur de commande et de ladite valeur effective commandée, un asservissement de l'aéronef relatif audit ordre de pilotage, en appliquant à l'aéronef un ordre permettant d'annuler le cas échéant la différence entre ladite valeur de commande et ladite valeur effective commandée,

est remarquable en ce que :

- ledit dispositif comporte de plus :

  - des quatrièmes moyens pour calculer, à partir de ladite valeur de commande et de ladite valeur effective commandée, une valeur de commande auxiliaire qui est plus proche de ladite valeur effective commandée que ladite valeur de commande ; et
  - des cinquièmes moyens pour réaliser une surveillance de ladite valeur de commande, permettant de détecter un pompage piloté ; et

- lesdits troisièmes moyens sont formés pour réaliser l'asservissement à l'aide de ladite valeur effective commandée et de ladite valeur de commande auxiliaire, en cas de détection par lesdits cinquièmes moyens d'un pompage piloté.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 montre schématiquement un mode de réalisation particulier de moyens d'un dispositif conforme à l'invention.

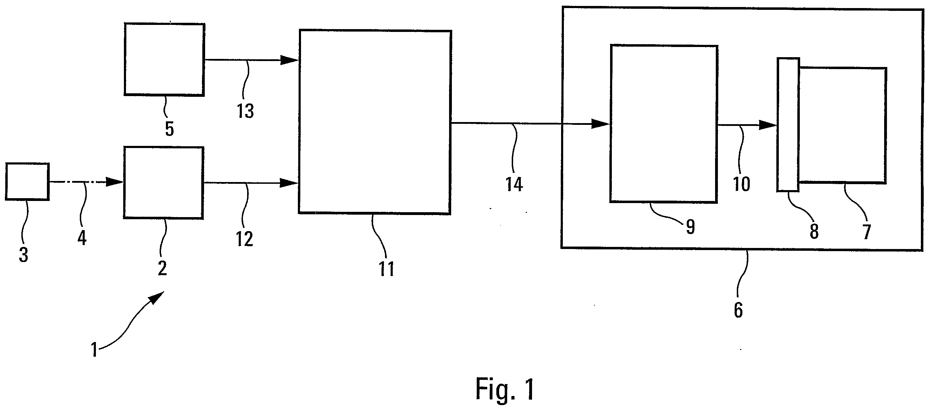

Le dispositif 1 conforme à l'invention et représenté schématiquement sur la figure 1, est un dispositif de pilotage (à commandes électriques) d'un aéronef non représenté, en particulier d'un avion de transport civil.

Ledit dispositif 1 est du type comportant :

- des moyens 2 pour déterminer une valeur de commande qui correspond à la valeur d'un ordre de pilotage relatif à au moins un axe de pilotage particulier dudit aéronef, par exemple l'axe de roulis, de lacet et/ou de tangage. La valeur de cet ordre de pilotage est représentative de l'actionnement d'au moins un organe de commande 3 usuel de l'aéronef par un pilote dudit aéronef. Lesdits moyens 2 sont formés de manière à pouvoir mesurer l'amplitude de l'actionnement dudit organe de commande 3, par exemple un minimanche, comme illustré par une liaison 4 en traits mixtes sur la figure 1 ;
- des moyens 5 pour déterminer une valeur effective commandée qui correspond à la valeur dudit ordre de pilotage (selon ledit axe de pilotage choisi) qui est effectivement appliqué à l'aéronef ; et
- un système d'asservissement 6 qui est formé de manière à réaliser, à l'aide de la valeur de commande reçue desdits moyens 2 et de la valeur effective commandée reçue desdits moyens 5, un asservissement de l'aéronef relatif audit ordre de pilotage, en appliquant à cet aéronef un ordre permettant d'annuler le cas échéant la différence entre ladite valeur de commande et ladite valeur effective commandée.

Pour ce faire, ledit système d'asservissement 6 comporte, de façon usuelle :

- au moins une gouverne 7 qui est susceptible d'agir sur l'axe de pilotage choisi de l'aéronef et qui est commandée par au moins un actionneur 8 ; et
- des moyens 9 qui déterminent un ordre permettant d'annuler la différence entre la valeur de commande et la valeur effective commandée et qui transmettent cet ordre à l'actionneur 8 de la gouverne 7 par l'intermédiaire d'une liaison 10.

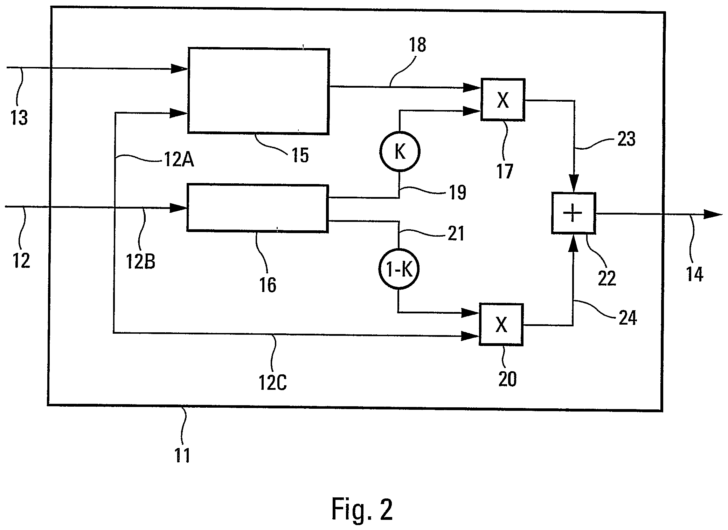

Selon l'invention, le dispositif 1 comporte, de plus, une unité de correction 11 qui est reliée par l'intermédiaire de liaisons 12, 13 et 14 respectivement auxdits moyens 2, 5 et 6 et qui comprend, comme représenté sur la figure 2 :

- des moyens 15 pour calculer, à partir d'une part de la valeur de commande reçue desdits moyens 2 (par l'intermédiaire d'une liaison 12A reliée à ladite liaison 12) et d'autre part de ladite valeur effective commandée reçue dudit moyen 5 (par l'intermédiaire de la liaison 13), une valeur de commande auxiliaire qui est, par définition, plus proche de ladite valeur effective commandée que ladite valeur de commande ; et
- des moyens 16 précisés ci-dessous, pour réaliser une surveillance de ladite valeur de commande reçue desdits moyens 2 par l'intermédiaire d'une liaison 12B reliée à ladite liaison 12. Cette surveillance est réalisée de manière à permettre de détecter tout pompage piloté, c'est-à-dire tout mouvement oscillatoire incontrôlé de l'aéronef résultant d'un déphasage critique entre l'action du pilote sur l'organe de commande 3 et la réponse de l'aéronef à cette action.

De plus, selon l'invention lesdits moyens 9 de l'unité d'asservissement 6 sont formés de manière à réaliser l'asservissement à l'aide de ladite valeur effective commandée (déterminée par lesdits moyens 5) et de ladite valeur de commande auxiliaire (calculée par lesdits moyens 15), en cas de détection d'un pompage piloté par lesdits moyens 16.

Ainsi, le dispositif 1 conforme à l'invention réalise une action corrective dès l'apparition d'un pompage piloté, ce qui permet d'empêcher l'installation d'un couplage instable du type précité et donc de conserver un pilotage particulièrement stable.

On notera qu'en calculant une valeur de commande auxiliaire et en appliquant cette valeur de commande auxiliaire à l'asservissement lors de la détection d'un pompage piloté, l'unité de correction 11 et l'unité de d'asservissement 6 réduisent le déphasage entre la valeur de commande utilisée et la valeur effective commandée, puisque ladite valeur de commande auxiliaire calculée est (par définition) plus proche de ladite valeur effective commandée que de ladite valeur de commande (ordre direct du pilote).

La réduction de ce déphasage empêche ainsi l'apparition de l'instabilité précitée.

En outre, comme ladite valeur de commande auxiliaire est déterminée (par lesdits moyens 15) notamment à partir de ladite valeur de commande et tient donc compte de l'ordre commandé par le pilote (en actionnant l'organe de commande 3), la correction introduite par le dispositif 1 conforme à l'invention ne perturbe pas (du moins pas excessivement) le pilotage de l'aéronef.

Dans le cadre de la présente invention, ledit axe de pilotage peut être un axe de roulis, un axe de tangage ou un axe de lacet. De plus, il est également envisageable que le dispositif 1 conforme à l'invention soit en mesure de réaliser la correction précitée simultanément selon plusieurs de ces axes de pilotage.

Dans un but d'illustration (non limitatif), on présente ci-après un mode de réalisation particulier de l'invention relatif au pilotage selon un axe de pilotage en roulis. Dans ce cas, l'ordre de pilotage précité représente un taux de roulis exprimé en degrés par seconde.

De plus, dans ce cas, pour calculer ladite valeur de commande auxiliaire, lesdits moyens 15 :

- déterminent une valeur $\Delta P$ dépendant de ladite valeur de commande P représentant un taux de roulis ;
- calculent le produit de cette valeur $\Delta P$ et de ladite valeur effective commandée $\underline{p}$ représentant un taux de roulis effectif commandé ; et
- en fonction de ce calcul :

  • si ce produit est supérieur à zéro, calculent la valeur de commande auxiliaire Paux représentant un taux de roulis auxiliaire, à l'aide de l'expression suivante :

$$Paux = \frac{(K.T.s)}{T.s+1} . \Delta P + p$$

dans laquelle :

    * K représente une valeur de gain prédéterminée ;
    * T représente une constante de temps prédéterminée ; et
    * s représente une variable caractéristique d'une transformation de Laplace ; et

• si ce produit est inférieur à zéro, calculent la valeur de commande auxiliaire Paux représentant un taux de roulis auxiliaire, à l'aide de l'expression suivante :

$$Paux = \frac{(K.T.s)}{T.s+1} . \Delta P$$

De préférence, dans ce cas, lesdits moyens 15 déterminent ladite valeur $\Delta P$, à l'aide de l'expression suivante :

$$\Delta P = P/5.$$

Ainsi, le dispositif 1 conforme à l'invention ne gêne pas le pilotage lors de l'absence d'un pilotage pompé et ne réduit pas de manière significative la maniabilité de l'aéronef dans ce cas.

La présente invention minimise donc le déphasage entre la valeur de commande (taux de roulis de commande P par exemple) et la valeur effective commandée (taux de roulis effectif commandé $p$ par exemple), par une action non linéaire sur ladite valeur de commande, par l'intermédiaire de la génération et de l'application de ladite valeur de commande auxiliaire (taux de roulis auxiliaire Paux par exemple).

En outre, selon l'invention, lesdits moyens 16 détectent un pilotage pompé à partir de la surveillance de la valeur de commande P issue desdits moyens 2. Plus précisément, lesdits moyens 16 détectent un pilotage pompé, lorsque l'une des deux conditions suivantes est vérifiée :

- la valeur de commande P représentant un taux de roulis dépasse successivement + NIVPIO, - NIVPIO et + NIVPIO à une fréquence comprise entre deux fréquences prédéterminées f1 (f1 = 0,125 Hz par exemple) et f2 (f2 = 0,5 Hz par exemple). NIVPIO représente une valeur prédéterminée de la graduation de l'organe de commande 3 de manière qu'un éventuel pompage n'active la loi que si l'organe de commande 3 est défléchi d'une valeur supérieure à NIVPIO ;
- ladite valeur de commande P représentant un taux de roulis dépasse successivement - NIVPIO, + NIVPIO et - NIVPIO à une fréquence comprise entre lesdites deux fréquences précitées f1 et f2.

Bien entendu, tant que la valeur de commande P continue de passer de + NIVPIO à - NIVPIO, un pilotage pompé est détecté.

Dans le mode de réalisation particulier représenté sur la figure 2, l'unité de correction 11 comporte de plus :

- un multiplicateur 17 qui multiplie la valeur de commande auxiliaire Paux (reçue desdits moyens 15 par l'intermédiaire d'une liaison 18) par un paramètre K reçu desdits moyens 16 par l'intermédiaire d'une liaison 19 ;
- un multiplicateur 20 qui multiplie la valeur de commande P (reçue desdits moyens 2 par l'intermédiaire d'une liaison 12C reliée à ladite liaison 12) par un coefficient (1 - K) reçu desdits moyens 16 par l'intermédiaire d'une liaison 21 ; et
- un sommateur 22 qui est relié par l'intermédiaire de liaisons 23 et 24 respectivement auxdits multiplicateurs 17 et 20 et qui fait la somme des multiplications réalisées par ces multiplicateurs 17 et 20 et qui transmet cette somme par l'intermédiaire de la liaison 14.

Dans ce cas, lesdits moyens 16 sont formés de manière à transmettre :

- une valeur K nulle, lorsque lesdits moyens 16 ne détectent aucun pilotage pompé de sorte que la valeur qui est alors transmise par la liaison 14 et qui est utilisée par les moyens 9 pour réaliser l'asservissement correspond à la valeur de commande P représentative de l'actionnement de l'organe de commande 3 par le pilote ; et
- une valeur K égale à 1, lorsque lesdits moyens 16 détectent un pilotage pompé de sorte que la valeur qui est transmise par l'intermédiaire de la liaison 14, correspond alors à la valeur de commande auxiliaire Paux. Dans ce cas, les moyens 9 réalisent donc l'asservissement à partir de cette valeur de commande auxiliaire Paux de sorte que la loi de correction conforme à l'invention est alors active.

La loi de correction conforme à l'invention s'enclenche pendant une durée prédéterminée T1 (temps pour faire passer K de 0 à 1) et s'arrête complètement après une durée prédéterminée T2 (temps pour faire passer K de 1 à 0). Les durées T1 et T2 sont fixées pour éviter une perturbation du pilotage, lors des activations et désactivations de la loi de correction.

**Revendications**

**1.** Procédé de pilotage d'un aéronef selon au moins un axe de pilotage dudit aéronef, procédé selon lequel :

A/ on détermine une valeur de commande qui correspond à la valeur d'un ordre de pilotage relatif audit axe de pilotage, ladite valeur étant représentative de l'actionnement d'au moins un organe de commande (3) de l'aéronef, par un pilote dudit aéronef ;
B/ on détermine une valeur effective commandée qui correspond à la valeur dudit ordre de pilotage, effectivement appliquée à l'aéronef ; et
C/ on réalise, à l'aide de ladite valeur de commande et de ladite valeur effective commandée, un asservissement de l'aéronef relatif audit ordre de pilotage, en appliquant à l'aéronef un ordre permettant d'annuler, le cas échéant, la différence entre ladite valeur de commande et ladite valeur effective commandée,

**caractérisé en ce que** :

- on calcule, à partir de ladite valeur de commande et de ladite valeur effective commandée, une valeur de commande auxiliaire qui est plus proche de ladite valeur effective commandée que ladite valeur de commande ;
- on réalise une surveillance de ladite valeur de commande permettant de détecter un pompage piloté ; et
- en cas de détection d'un pompage piloté, on réalise l'asservissement à l'étape C/, à l'aide de ladite valeur effective commandée et de ladite valeur de commande auxiliaire.

**2.** Procédé selon la revendication 1, **caractérisé en ce que** ledit axe de pilotage correspond à l'axe de pilotage en roulis et ledit ordre de pilotage représente un taux de roulis.

**3.** Procédé selon la revendication 2, **caractérisé en ce que**, pour calculer ladite valeur de commande auxiliaire :

- on détermine une valeur ΔP dépendant de ladite valeur de commande P représentant un taux de roulis ;
- on calcule le produit de cette valeur ΔP et de la valeur effective commandée p représentant un taux de roulis effectif commandé ; et
- en fonction de ce calcul :

• si ce produit est supérieur à zéro, on calcule la valeur de commande auxiliaire Paux représentant un taux de roulis auxiliaire, à l'aide de l'expression suivante :

$$Paux = \frac{(K.T.s)}{T.s+1}. \Delta P + p$$

dans laquelle :

\* K représente une valeur de gain prédéterminée ;
\* T représente une constante de temps prédéterminée ; et
\* s représente une variable caractéristique d'une transformation de Laplace ;

et
• si ce produit est inférieur à zéro, on calcule la valeur de commande auxiliaire Paux représentant un taux de roulis auxiliaire, à l'aide de l'expression suivante :

$$Paux = \frac{(K.T.s)}{T.s+1}. \Delta P$$

**4.** Procédé selon la revendication 3, **caractérisé en ce que** l'on détermine ladite valeur ΔP, à l'aide de l'expression suivante :

$$\Delta P = P/5$$

**5.** Procédé selon l'une quelconque des revendications 2 à 4, **caractérisé en ce que** l'on détecte un pilotage pompé, lorsque l'une des deux conditions suivantes est vérifiée :

- la valeur de commande P représentant un taux de roulis dépasse successivement + NIVPIO, - NIVPIO et + NIVPIO à une fréquence comprise entre deux fréquences prédéterminées, NIVPIO représentant une valeur prédéterminée ;
- ladite valeur de commande P dépasse successivement - NIVPIO, + NIVPIO et - NIVPIO à une fréquence comprise entre lesdites deux fréquences prédéterminées.

**6.** Procédé selon l'une quelconque des revendications 1 à 5, **caractérisé en ce qu'**un asservissement sur la valeur de commande auxiliaire s'enclenche sur une première durée prédéterminée et s'arrête complètement après une seconde durée prédéterminée.

**7.** Procédé selon l'une quelconque des revendications précédentes, **caractérisé en ce que** ledit axe de pilotage correspond à l'axe de pilotage en tangage.

8. Procédé selon l'une quelconque des revendications précédentes, **caractérisé en ce que** ledit axe de pilotage correspond à l'axe de pilotage en lacet.

9. Dispositif de pilotage d'un aéronef selon au moins un axe de pilotage, ledit dispositif (1) comportant :

- des premiers moyens (2) pour déterminer une valeur de commande qui correspond à la valeur d'un ordre de pilotage relatif audit axe de pilotage, cette valeur étant représentative de l'actionnement d'au moins un organe de commande (3) de l'aéronef par un pilote dudit aéronef ;
- des deuxièmes moyens (5) pour déterminer une valeur effective commandée qui correspond à la valeur dudit ordre de pilotage, effectivement appliquée à l'aéronef ; et
- des troisièmes moyens (6) pour réaliser, à l'aide de ladite valeur de commande et de ladite valeur effective commandée, un asservissement de l'aéronef relatif audit ordre de pilotage, en appliquant à l'aéronef un ordre permettant d'annuler le cas échéant la différence entre ladite valeur de commande et ladite valeur effective commandée,

**caractérisé en ce que** :

- ledit dispositif (1) comporte de plus :

• des quatrièmes moyens (15) pour calculer, à partir de ladite valeur de commande et de ladite valeur effective commandée, une valeur de commande auxiliaire qui est plus proche de ladite valeur effective commandée que ladite valeur de commande ; et
• des cinquièmes moyens (16) pour réaliser une surveillance de ladite valeur de commande, permettant de détecter un pompage piloté ; et

- lesdits troisièmes moyens (6) sont formés pour réaliser l'asservissement à l'aide de ladite valeur effective commandée et de ladite valeur de commande auxiliaire, en cas de détection par lesdits cinquièmes moyens (16) d'un pompage piloté.

10. Aéronef,
**caractérisé en ce qu'**il comporte un dispositif (1) tel que celui spécifié sous la revendication 9.

**Patentansprüche**

1. Steuerungsverfahren für ein Luftfahrzeug gemäß wenigstens einer Steuerachse des Luftfahrzeuges, durchgeführt gemäß:

A/ feststellen eines Befehlswertes, der dem Wert eines Steuerbefehls in Bezug auf die Steuerachse entspricht, wobei der Wert repräsentativ ist für die Betätigung wenigstens eines Steuerorgans (3) des Luftfahrzeuges durch einen Piloten des Luftfahrzeuges;
B/ feststellen eines vorgegebenen effektiven Wertes, der dem Wert des effektiv auf das Luftfahrzeug angewendeten Steuerbefehls entspricht; und
C/ realisieren einer Steuerung des Luftfahrzeuges in Bezug auf den Steuerbefehl mit Hilfe des Befehlswertes und dem vorgegebenen effektiven Wert, indem auf das Luftfahrzeug ein Befehl angewendet wird, der gegebenenfalls die Differenz zwischen dem Befehlswert und dem vorgegebenen effektiven Wert annulliert,

**dadurch gekennzeichnet, dass**:

- ausgehend von dem Befehlswert und dem vorgegebenen effektiven Wert ein Hilfsbefehlswert berechnet wird, der näher an dem vorgegebenen effektiven Wert ist als der Befehlswert;
- eine Überwachung des Befehlswertes realisiert wird, die es gestattet, eine gesteuerte Schwingung zu detektieren; und
- im Falle einer Detektion von einer gesteuerten Schwingung wird die Steuerung in Schritt C/ mit Hilfe des vorgegebenen effektiven Wertes und dem Hilfsbefehlswert realisiert.

2. Verfahren nach Anspruch 1,
**dadurch gekennzeichnet, dass** die Steuerachse der Steuerrollachse entspricht und dass der Steuerbefehl eine Rollrate darstellt.

3. Verfahren nach Anspruch 2,
**dadurch gekennzeichnet, dass** um den Hilfsbefehls Wert zu berechnen:

- wird ein Wert $\Delta P$ festgestellt, der von dem Befehlswert P abhängt, der eine Rollrate darstellt;
- wird das Produkt von diesem Wert $\Delta P$ und dem vorgegebenen effektiven Wert p berechnet, der eine vorgegebene effektive Rollrate darstellt; und
- abhängig von dieser Rechnung:

• wenn dieses Produkt größer als Null ist, den Hilfsbefehlswert Paux, der eine Hilfsrollrate darstellt, mit Hilfe des folgenden Ausdruckes berechnen:

$$Paux = \frac{(K.T.s)}{T.s + 1} \Delta P + p$$

bei dem:

* K einen vorbestimmten Verstärkungswert darstellt;
* T eine vorbestimmte Zeitkonstante darstellt; und
* s eine charakteristische Variable in einer Laplace-Transformation darstellt; und

• wenn das Produkt kleiner als Null ist, den Hilfsbefehlswert Paux, der eine Hilfsrollrate darstellt, mit Hilfe des folgenden Ausdruckes berechnen:

$$Paux = \frac{(K.T.s)}{T.s + 1} \Delta P$$

4. Verfahren nach Anspruch 3,
**dadurch gekennzeichnet, dass** der Wert $\Delta P$ mit Hilfe des folgenden Ausdruckes bestimmt wird:

$$\Delta P = P/5.$$

5. Verfahren nach einem der Ansprüche 2 bis 4,
**dadurch gekennzeichnet, dass** eine gesteuerte Schwingung detektiert wird, wenn eine der beiden folgenden Bedingungen verifiziert wird:

- der Befehlswert P, der eine Rollrate darstellt, überschreitet nacheinander +NIVPIO,

- NIVPIO und + NIVPIO, mit einer Frequenz, die zwischen zwei vorbestimmten Frequenzen liegt, wobei NIVPIO einem vorbestimmten Wert darstellt;

- der Befehlswert P überschreitet nacheinander -NIVPIO, + NIVPIO und - NIVPIO mit einer Frequenz, die zwischen den zwei vorbestimmten Frequenzen liegt.

6. Verfahren nach einem der Ansprüche 1 bis 5,
**dadurch gekennzeichnet, dass** eine Steuerung auf den Hilfsbefehlswert für eine erste vorbestimmte Zeitdauer einrastet und nach einer zweiten vorbestimmten Zeitdauer vollständig aufhört.

7. Verfahren nach einem der vorstehenden Ansprüche,
**dadurch gekennzeichnet, dass** die Steuerachse der Nicksteuerachse entspricht.

8. Verfahren nach einem der vorstehenden Ansprüche,
**dadurch gekennzeichnet, dass** die Steuerachse einer Giersteuerachse entspricht.

9. Steuervorrichtung für ein Luftfahrzeug gemäß wenigstens einer Steuerachse, wobei die Vorrichtung (1) umfasst:

- erste Mittel (2) um einen Befehlswert festzustellen, der dem Wert eines Steuerbefehls in Bezug auf die Steuerachse entspricht, wobei dieser Wert der Betätigung von wenigstens einem Steuerorgan (3) des Luftfahrzeuges durch einen Piloten des Luftfahrzeuges entspricht;
- zweite Mittel (5) um einen vorgegebenen effektiven Wert festzustellen, der dem Wert des Steuerbefehls entspricht und effektiv auf das Luftfahrzeug ausgeübt wird; und
- dritte Mittel (6), um mit Hilfe des Befehlswertes und des vorgegebenen effektiven Wertes eine Steuerung des Luftfahrzeuges in Bezug auf den Steuerbefehl zu realisieren, indem auf das Luftfahrzeug ein Befehl angewendet wird, der gegebenenfalls die Differenz zwischen dem Befehlswert und dem vorgegebenen effektiven Wert annulliert,

**dadurch gekennzeichnet, dass**

- die Vorrichtung (1) außerdem umfasst:

• vierte Mittel (15), um ausgehend von dem Befehlswert und dem vorgegebenen effektiven Wert einen Hilfsbefehlswert zu berechnen, der näher an dem vorgegebenen effektiven Wert ist als an dem Befehlswert; und
• fünfte Mittel (16), um eine Überwachung des Befehlswertes zu realisieren, die es gestattet, eine gesteuerte Schwingung zu detektieren; und wobei

- die dritten Mitte! (6) ausgebildet sind, um, im Falle einer Detektion von einer gesteuerten Schwingung durch die fünften Mittel (16), eine Steuerung mit Hilfe des vorgegebenen effektiven Wertes und dem Hilfsbefehlswert zu realisieren.

10. Luftfahrzeug,
**dadurch gekennzeichnet, dass** es eine Vorrichtung (1) nach Anspruch 9 umfasst.

**Claims**

1. A method of piloting an aircraft according to at least one piloting axis of said aircraft, according to which method:

A/ a control value is determined which corresponds to the value of a piloting instruction relating to said piloting axis, said value being representative of the actuation of at least one control member (3) of the aircraft, by a pilot of said aircraft;

B/ an actual controlled value is determined which corresponds to the value of said piloting instruction, actually applied to the aircraft; and

C/ a slaving of the aircraft relating to said piloting instruction is effected, with the aid of said control value and of said actual controlled value, by applying to the aircraft an instruction making it possible to zero, if appropriate, the difference between said control value and said actual controlled value,

**characterized in that**:

- an auxiliary control value which is closer to said actual controlled value than said control value is calculated on the basis of said control value and of said actual controlled value;
- a monitoring of said control value making it possible to detect a pilot induced oscillation is effected; and
- in the event that a pilot induced oscillation is detected, the slaving in step C/ is effected with the aid of said actual controlled value and of said auxiliary control value.

2. The method as claimed in claim 1 **characterized in that** said piloting axis corresponds to the roll piloting axis and said piloting instruction represents a roll rate.

3. The method as claimed in claim 2 **characterized in that**, to calculate said auxiliary control value:

- a value $\Delta P$ dependent on said control value P representing a roll rate is determined;
- the product of this value $\Delta P$ and of the actual controlled value $\underline{p}$ representing an actual controlled roll rate is calculated; and
- on the basis of this calculation:

• if this product is greater than zero, the auxiliary control value Paux representing an auxiliary roll rate is calculated with the aid of the following expression:

$$\text{Paux} = \frac{(\underline{K.T.s}) . \ \Delta P + \underline{p}}{T.s + 1}$$

in which:

* K represents a predetermined gain value;
* T represents a predetermined time constant; and
* s represents a characteristic variable of a Laplace transformation; and

• if this product is less than zero, the auxiliary control value Paux representing an auxiliary roll rate is calculated with the aid of the following expression:

$$\text{Paux} = \frac{(\underline{K.T.s}) . \ \Delta P}{T.s + 1}$$

4. The method as claimed in claim 3 **characterized in that** said value $\Delta P$ is determined with the aid of the following expression:

$$\Delta P = P/5$$

5. The method as claimed in any one of claims 2 to 4 **characterized in that** a pilot induced oscillation is detected when one of the following two conditions is satisfied:

- the control value P representing a roll rate successively exceeds + NIVPIO, - NIVPIO and + NIVPIO at a frequency lying between two predetermined frequencies, NIVPIO representing a predetermined value;
- said control value P successively exceeds - NIVPIO, + NIVPIO and - NIVPIO at a frequency lying between said two predetermined frequencies.

6. The method as claimed in any one of claims 1 to 5 **characterized in that** a slaving on the auxiliary control value is engaged over a first predetermined duration and stops completely after a second predetermined duration.

7. The method as claimed in any one of the preceding claims **characterized in that** said piloting axis corresponds to the pitch piloting axis.

8. The method as claimed in any one of the preceding claims **characterized in that** said piloting axis corresponds to the yaw piloting axis.

9. A device for piloting an aircraft according to at least one piloting axis, said device (1) comprising:

- first means (2) for determining a control value which corresponds to the value of a piloting instruction relating to said piloting axis, this value being representative of the actuation of at least one control member (3) of the aircraft by a pilot of said aircraft;
- second means (5) for determining an actual controlled value which corresponds to the value of said piloting instruction, actually applied to the aircraft; and
- third means (6) for effecting, with the aid of said control value and of said actual controlled value, a slaving of the aircraft relating to said piloting instruction, by applying to the aircraft an instruction making it possible to zero if appropriate the difference between said control value and said actual controlled value,

**characterized in that**:

- said device (1) moreover comprises:

  • fourth means (15) for calculating, on the basis of said control value and of said actual controlled value, an auxiliary control value which is closer to said actual controlled value than said control value; and
  • fifth means (16) for effecting a monitoring of said control value, making it possible to detect a pilot induced oscillation; and

- said third means (6) are formed so as to effect the slaving with the aid of said actual controlled value and of said auxiliary control value, in the event that said fifth means (16) detect a pilot induced oscillation.

10. An aircraft
**characterized in that** it comprises a device (1) such as that specified under claim 9.

Fig. 1

Fig. 2

**EP 1 907 912 B1**

## RÉFÉRENCES CITÉES DANS LA DESCRIPTION

**Documents brevets cités dans la description**

- US 5935177 A